# EUROPÄISCHE PATENTANMELDUNG

(11) **EP 2 559 670 A1**
(43) Veröffentlichungstag der Anmeldung: **20.02.2013**
(21) Anmeldenummer: 11006714.7
(22) Anmeldetag: 17.08.2011
(51) Int. Cl.: C03C 17/00

(54) **Glas mit Korrosions-Schutzschicht und Verfahren zur Herstellung des Glases**

(71) Anmelder: CENTROSOLAR Glas GmbH & Co. KG, 90766 Fürth (DE)
(72) Erfinder: Hofmann, Thomas Dr., 90763 Fürth (DE); Sontheimer, Thomas, 90574 Rosstal (DE); Glaubitt, Walther, 92276 Margetshöchheim (DE)
(74) Vertreter: Walkenhorst, Andreas

(57) **Zusammenfassung**

Ein Glas (1), versehen mit einer Korrosions-Schutzschicht (2), soll insbesondere für technische Anwendungen besonders geeignet sein und durch die aufgebrachte Korrosions-Schutzschicht (2) mit vergleichsweise einfachen Mitteln besonders wirksam gegen Korrosionseffekte und insbesondere gegen unerwünschte Auslaugung geschützt sein. Dazu ist die Korrosions-Schutzschicht (2) erfindungsgemäß porös ausgeführt und weist eine Porosität, gemessen durch den Anteil des Porenvolumens am Gesamtvolumen der Schicht (2), von mindestens 30 % auf.

## Beschreibung

Die Erfindung bezieht sich auf ein Glas, versehen mit einer Korrosions-Schutzschicht. Sie betrifft weiter ein Verfahren zur Herstellung eines derartigen Glases.

Gläser, wie sie insbesondere bei Sonnenkollektoren, in Fensterverglasungen oder dergleichen eingesetzt werden, können korrodieren, wenn sie über längere Zeit Feuchtigkeit zum Beispiel durch Witterung ausgesetzt sind. Erkennbar ist fortschreitende Glaskorrosion an einem weißen Schleier oder an irisierend schillernden Filmen auf dem Glas. Als Ursachen oder Beschleuniger der Glaskorrosion kommen neben Wasser noch andere Substanzen in Frage, die in feuchter Umgebung auf das Glas einwirken. Zu nennen sind hier Kohlendioxid aus der Luft und Schwefelverbindungen. Die Folgen derartiger Korrosion, insbesondere die Verminderung des Transmissionsgrades bei technischen Anwendungen oder auch die Verschlechterung der optischen und ästhetischen Eigenschaften, können dabei sehr unerwünscht sein.

Es hat sich herausgestellt, dass es insbesondere durch Wasser zur Auslaugung, insbesondere von für Architektur und Solaranwendungen verwendeten Natron-Kalk-Gläsern kommt. Die Auslaugung von Alkaliionen, insbesondere von Natrium, führt dabei zur genannten Glaskorrosion, die die Eintrübungen des Glases und/oder eine Zersetzung der Glasmatrix verursacht.

Zum Schutz gegen derartige Korrosionseffekte kann ein Glas mit einer geeignet gewählten Korrosionsschutzschicht versehen sein. Beispielsweise ist aus der DE 10 2008 056 792 A1 ein für technische Einsätze bestimmtes Antireflex-beschichtetes Glas bekannt, bei dem aufgrund einer porösen Ausführung der dort beschriebenen Antireflex-Beschichtung mit Korrosion des Glases aufgrund von durch die Antireflex-Beschichtung hindurchtretendem Wasserdampf gerechnet werden muss. Um dem zu begegnen, ist das bekannte Glas mit einer zwischen der Glasoberfläche und der Antireflex-Beschichtung vorgesehenen Korrosions-Schutzschicht versehen. Die Glaskorrosionsprozesse sollen dabei wirksam durch eine dichte Korrosions-Schutzschicht verhindert werden. Die Korrosions-Schutzschicht soll dabei entweder verhindern, dass Wasser mit dem Substratglas in Kontakt kommt, oder verhindern, dass Alkaliionen, insbesondere Natriumionen, vom Glas durch die Schicht diffundieren ("Auslaugen").

Die Korrosionsschutzschicht ist dabei als dichte Siliziumoxidschicht aufgebracht. Zum Aufbringen dieser Korrosionsschutzschicht eignen sich verschiedenste Verfahren, insbesondere kann die Schicht flammpyrolytisch aufgetragen werden oder mittels eines PVD- oder CVD-Verfahrens abgeschieden werden. Besonders vorteilhaft ist hierbei der Einsatz einer dichten Silizium-Titan-Oxid-Mischschicht, die in etwa den gleichen Brechwert wie das Substratglas aufweist. Sie kann beispielsweise dick ausgeführt werden, ohne die optischen Eigenschaften des Glases zu verändern. Die Korrosionsschutz- und Barrierewirkung ist deshalb in diesem Fall besonders gut ausgeprägt.

Eine alternative Möglichkeit, Glaskorrosion zu unterbinden, kann durch gezieltes und selektives Auslaugen des Substratglases im Oberflächenbereich erreicht werden. Dazu kann beispielsweise eine Plasmabehandlung vorgesehen sein, durch die Alkali-und/oder Erdalkalibestandteile im Oberflächenbereich mit einer relativ guten Selektivität entfernt werden können. Eine gute Korrosionsschutzwirkung ist dann gegeben, wenn die Diffusion von Na-Ionen nach dem DIN-Test 52 296 um zumindest 30 % reduziert wird.

Zinksalze wie Zinkphosphat Zn₃(PO₄)₂ eignen sich ebenfalls als Korrosionsschutz für Glas. Sie werden in Geschirrspülmaschinen angewendet. Beispielsweise beruht das in der EP 0 383 482 B1 offenbarte Konzept auf der Annahme, dass Zinksalze auf der Glasoberfläche abgeschieden werden und so die Auslaugung des Glases verhindert werden kann. Bevorzugt werden dabei gering lösliche Salze eingesetzt, die sich nur in kleiner Menge als sehr dünne, nicht sichtbare Schicht auf dem Glas niederschlagen, die aber ausreicht, um vor Korrosion zu schützen.

Der Erfindung liegt die Aufgabe zu Grunde, ein insbesondere für technische Anwendungen besonders geeignetes Glas anzugeben, das durch eine aufgebrachte Korrosions-Schutzschicht mit vergleichsweise einfachen Mitteln besonders wirksam gegen Korrosionseffekte und insbesondere gegen die unerwünschte Auslaugung geschützt ist. Des Weiteren soll ein zur Herstellung des Glases besonders geeignetes Verfahren angegeben werden.

Bezüglich des Glases wird diese Aufgabe erfindungsgemäß gelöst, indem die Korrosions-Schutzschicht porös ausgeführt ist und eine Porosität, gemessen durch den Anteil des Porenvolumens am Gesamtvolumen der Schicht, von mindestens 30 % aufweist.

Die Erfindung geht dabei von der Überlegung aus, dass ein besonders wirksamer Schutz der Glasoberfläche erreichbar ist, indem die Korrosions-Schutzschicht gezielt auf die zu erwartenden Korrosionsprozesse abgestimmt ist. Dabei sollte berücksichtigt werden, dass Glasoberflächen Alkali- Ionen enthalten, die nicht statistisch verteilt vorliegen. Entsprechende Modelle zeigen miteinander verwobene Netzwerke, wovon eines aus kovalent gebundenem SiO₂ und andere aus ionischen Verbindungen wie Na₂O bestehen. Das ionische Netzwerk ermöglicht dabei die Wanderung von Na-Ionen.

Die ersten Schritte des Glasangriffes durch wässrige Spezies erfassen nur wenige Atomlagen des Glases. Sie erfolgen lokal unterschiedlich, was in Folge zu einer lateralen Differenzierung der Oberfläche führt. Bestimmte Stellen der Oberfläche sind besonders empfindlich gegen den korrosiven Wasserangriff und unterscheiden sich daher chemisch und strukturell. Die lokalen Initiatoren der Glaskorrosion können intrinsische Inhomogenitäten unter der Oberfläche sein in Verbindung mit Adsorbaten aus lokaler Übersättigung auf der Oberfläche. Sie enthalten Na-Ionen und Wasser. Unter Einwirkung von CO₂ und Sulfat aus der Luft bilden sich an diesen Stellen Ablagerungen von NaHCO₃ und Sulfat. Hochaufgelöste Abbildungen der ersten Stadien der Oberflächenveränderung zeigen, dass es solche lokalen Zentren des Angriffs gibt. Die laterale Ausdehnung dieser an Na-Ionen reichen Stellen geht von 50 nm bis 150 nm. Ein besonders wirksamer Korrosionsschutz sollte daher gezielt an diesen lokalen Angriffsbereichen ansetzen.

Die korrosionsempfindlichen Stellen der Glasoberfläche enthalten Na-Ionen. Sie sind thermodynamisch instabil und verfügen über Hydroxygruppen, die mit dem silicatischen Netzwerk verbunden sind. Die reaktiven Gruppen sind bevorzugte Ankerpunkte für Adsorbate aus der Umgebung des Glases. Sie sollten sich daher gut eignen, spezielle Korrosionsinhibitoren dauerhaft chemisch zu binden anstatt Aersolpartikel aus der Luft.

Wie sich völlig überraschend herausgestellt hat, kann ein derartiger zielgerichtet an die Oberflächenstruktur des Glases angepasster Korrosionsschutz erreicht werden, indem die Korrosions-Schutzschicht unter grundsätzlicher Abkehr von dem bei bekannten Systemen zu Grunde gelegten Auslegungsziel einer möglichst dicht ausgeführten Korrosions-Schutzschicht nunmehr gezielt porös ausgeführt wird.

Die Porosität wird dabei vorzugsweise ermittelt durch Beaufschlagung der beschichteten Oberfläche mit Wasserdampf unterschiedlicher Konzentration und anschließende Ellipsometrie. Die Ellipsometrie in Verbindung mit Adsorptionsmessung erlauben die Bestimmung der Gesamtporosität als auch die offene Porosität. Aus den Adsorptions-Desorptionskurven wird der für Wasser zugängliche Kapillardurchmesser der Poren und die Dicke der porösen Oberflächenzone bestimmt.

Die partielle Versiegelung der Glasoberfläche mit Korrosions-Schutzmaterial in Kombination mit offenen Bereichen oder Poren wirkt im visuellen Spektralbereich in zusätzlicher vorteilhafter Ausgestaltung entspiegelnd, wenn die Versiegelung eine ausreichende Dicke aufweist. Bei einer guten Reflexionsminderung des Glases liegt die Porosität besonders bevorzugt zwischen 30 % bis 60 % des Gesamtvolumens der aufgebrachten Schutzabdeckung, wobei in alternativer oder zusätzlicher vorteilhafter Ausgestaltung die Dicke der Schutzschicht zwischen 80 nm und 160 nm beträgt. In einer solchen Ausführungsform erhält man korrosionsbeständiges Antireflexglas aus kostengünstigem Natron-Kalk-Glas, so dass ein Einsatz den vergleichsweise teuren, korrosionsbeständigen Borosilicatglas nicht notwendig ist.

Um den gewünschten, selektiv auf die Korrosionszentren des Glases ausgerichteten Schutzeffekt besonders zu begünstigen, ist die Wahl der Porengröße in der Schutzschicht ein wichtiges Auslegungskriterium. Wie sich herausgestellt hat, ist ein besonders wirksamer Korrosionsschutz erreichbar, indem die Korrosions-Schutzschicht in besonders vorteilhafter Ausgestaltung Poren mit einer Porengröße von mindestens 8 nm Durchmesser aufweist. Die Porengröße wird dabei bevorzugt ermittelt durch ellipsometrische Porosimetrie. Mit ellipsometrischer Porosimetrie unter Atmosphärendruck (EP-A) können die für Wasser zugängliche Porosität und die Porenradien von Mesoporen (2 bis 50 nm), sowie die Schichtdicke von transparenten Schichten ermittelt werden. In einer Kammer mit der Probe wird dabei schrittweise die relative Feuchte erhöht und jeweils eine spektrale ellipsometrische Messung (250 nm - 1000 nm) durchgeführt. Mit jedem Schritt füllen sich die Poren gemäß der angebotenen Feuchtigkeit. In der Auswertung wird jeder Schritt modellbasiert angefittet und der Brechungsindex bei der Wellenlänge 633 nm ermittelt. Aus diesen Werten ergeben sich eine Adsorptions- und eine Desorptionskurve. Mit der Lorenz-Lorentz-Gleichung wird daraus die Menge adsorbierten Wassers in Prozent berechnet. Die Porenradien werden aus der Adsorptionskurve, die Radien der Porenverbindungen aus der Desorptionskurve über die Kelvin-Gleichung und BJH-Modell bestimmt. In diese Kalkulation geht auch der Kontaktwinkel von Wasser mit der Probenoberfläche ein, welcher vorher über ein handelsübliches Kontaktwickelmessgerät bestimmt wird.

Als Ergebnis einer derartigen Messmethode wird die Größenverteilung der Poren in der Korrosions-Schutzschicht erhalten. Für die besonders bevorzugte Ausführungsform der Schutzschicht mit Poren einer Mindestgröße von 8 nm Durchmesser bedeutet dies, dass in der erhaltenen Verteilung Poren mit einem Durchmesser von weniger als 8 nm nicht oder nahezu nicht nachweisbar sind. In einer alternativen oder zusätzlichen besonders bevorzugten Ausführungsform, mit der eine besonders hohe Schutzwirkung erreichbar ist, weisen die Poren der Korrosions-Schutzschicht eine Größenverteilung auf, deren Maximalwert bei einem Durchmesser zwischen 15 nm und 50 nm, vorzugsweise bei etwa 20 nm liegt.

Besonders bevorzugt liegt das Basismaterial in der Korrosions-Schutzschicht als Kolloid-Material vor. Kennzeichnend für derartige Kolloide ist, dass sie praktisch keine Poren im Bereich ≤ 8 nm aufweisen. Sollten die Schutzabdeckungen aus mehreren Kolloiden bestehen, gilt dies auch für die Grenzflächen zwischen ihnen.

Für eine hohe Schutzwirkung ist als Basismaterial zur Bildung der Korrosions-Schutzschicht vorteilhafterweise ein sich mit der Glasoberfläche diffusionsdicht verbindendes Material, insbesondere Al₂O₃, TiO₂, ZrO₂, P₂O₅ oder MgF₂ , besonders bevorzugt SiO₂, vorgesehen. Insbesondere sind dabei als korrosionsstabiles Basismaterial Al₂O₃ und/oder SiO₂ vorgesehen, die selbst Glasbestandteil sind und daher mit dem Glas eine besonders innige und stabile Verbindung eingehen können. Gerade in Verbindung mit den genannten Porengrößen und/oder der Ausführung des Basismaterials für die Schutzschicht als Kolloid-Material entstehen dabei lokale Schutzzonen für die darunterliegenden, korrosionsanfälligen Zonen der Glasoberfläche, die diese Iokal wirksam abschirmen und zudem diffusionsdicht sind. Die lokalen Schutzzonen aus diffusionsdichten Kolloidpartikeln verbinden sich durch die geeignete Materialwahl chemisch fest mit der Glasoberfläche.

Vorteilhafterweise ist das Glas als vorgespanntes Sicherheitsglas ausgeführt, so dass eine vielseitige Verwendbarkeit gegeben ist.

Bezüglich des Verfahrens wird die genannte Aufgabe gelöst, indem die Korrosions-Schutzschicht mittels eines Sol-Gel-Verfahrens auf ein Glassubstrat aufgebracht wird.

Besonders vorteilhaft wird das Glas zur Abdeckung eines Sonnenkollektors oder einer photovoltaischen Zelle oder in einem Fensterelement, insbesondere in einem Gewächshaus, in einem Tropenhaus oder einer Nasszelle, verwendet. Alternativ wird das Glas bevorzugt für marine Zwecke, vorzugsweise in Schiffen, oder in der Luft- und Raumfahrt, bevorzugt für ein Cockpit eines Flugzeugs, verwendet.

Die mit der Erfindung erzielten Vorteile bestehen insbesondere darin, dass durch die gezielte Bereitstellung einer porös ausgeführten Korrosions-Schutzschicht für das Glas in überraschender Weise die Schutzwirkung fokussiert und wirksam auf die für Korrosion besonders anfälligen Bereiche der Glasoberfläche ausgerichtet werden kann. Die Korrosions-Schutzschicht fügt dem Glas ihre Hauptkomponente gerade aufgrund der porösen Ausführung nur in vergleichsweise geringer Menge hinzu und verschließt damit selektiv die korrosionsempfindlichen Stellen, ohne dass damit die chemische Zusammensetzung der Glasoberfläche entscheidend verändert wird. Die chemische Zusammensetzung des Glases bleibt damit im Wesentlichen erhalten.

Ein Ausführungsbeispiel der Erfindung wird anhand einer Zeichnung näher erläutert. Darin zeigen:
- FIG. 1: ein mit einer Korrosions-Schutzschicht versehenes Glas im Querschnitt, und
- FIG. 2 bis 5: jeweils ein Diagramm für eine Porengrößenverteilung.

Gleiche Teile sind in allen Figuren mit denselben Bezugszeichen versehen.

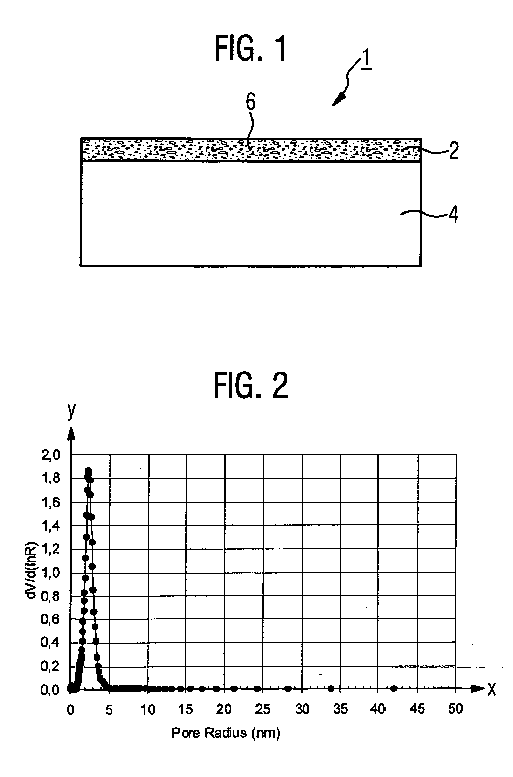

Das Glas 1 gemäß FIG. 1 ist zum Schutz gegen Korrosion mit einer Korrosions-Schutzschicht 2 versehen. Die Korrosions-Schutzschicht 2 ist dabei für eine besonders hohe Schutzwirkung ausgelegt. Dazu ist die Korrosions-Schutzschicht 2 porös ausgeführt und umfasst eine Vielzahl von von einem Basismaterial 4 eingeschlossenen Poren 6. Als Basismaterial 4 ist dabei im Ausführungsbeispiel SiO₂ vorgesehen, da dieses selbst Glasbestandteil ist und daher mit dem Glas 1 eine besonders innige und stabile Verbindung eingehen kann. Für eine hohe Schutzwirkung kann als Basismaterial 4 zur Bildung der Korrosions-Schutzschicht 2 alternativ aber auch ein anderes, sich mit der Glasoberfläche diffusionsdicht verbindendes Material, insbesondere Al₂O₃, TiO₂, ZrO₂, P₂O₅ oder MgF₂, vorgesehen, sein.

Das Glas 1, das im Übrigen als thermisch vorgespanntes Sicherheitsglas ausgeführt ist, weist für die angestrebte besonders hohe Schutzwirkung gegen Korrosion eine nach folgenden Kriterien ausgelegte Korrosions-Schutzschicht 2 auf:

Die Korrosions-Schutzschicht 2 ist porös ausgeführt, wobei die Porosität, gemessen durch den Anteil des Porenvolumens am Gesamtvolumen der Schicht 2, vorzugsweise zwischen mindestens 30 % und höchstens 60 % liegt. Weiterhin ist die Korrosions-Schutzschicht 2 derart ausgeführt, dass die Poren 6 eine Porengröße von mindestens 8 nm Durchmesser haben, so dass Porengrößen von weniger als 8 nm Durchmesser in der Größenverteilung anteilig nicht nennenswert vorhanden sind. Wie nachfolgend noch näher erläutert wird, weisen die Poren 6 zudem eine Größenverteilung auf, deren Maximalwert bei einem Durchmesser zwischen 15 nm und 50 nm, besonders bevorzugt im Bereich 12 bis 30 nm liegt.

Zur Überprüfung und zum Nachweis der Schutzwirkung wurden einige Vergleichsversuche mit geeignet beschichteten Gläsern 1 mit unterschiedlich ausgestalteten Korrosions-Schutzschichten 2 durchgeführt. In der folgenden Tabelle sind einige Eigenschaften der verschiedenen Ausführungsbeispiele insbesondere hinsichtlich deren Korrosionswirksamkeit im Vergleich zu einem Referenzglas dargestellt. Die Prüfung der hydrolytischen Beständigkeit an Glasplatten wurde nach DIN 52 296 an jeweils zwei Glasplatten bei 98 °C im Wärmebad durchgeführt und ausgewertet. Die nachstehende Darstellung zeigt in Form einer Tabelle und auch als graphische Darstellung die ermittelte Konzentration der von den Glasoberflächen ausgelaugten Bestandteilen.

**Tabelle 1: Konzentrationen der von der Oberfläche eluierten Glasbestandteile ermittelt mit ICP-Spektroskopie**

| **Probe** | **SiO₂** | **Al₂O₃** | **CaO** | **K₂O** | **mgO** | **Na₂O** | **Na₂O** |
|---|---|---|---|---|---|---|---|
| | **[µg/dm ²]** | **[µg/dm ²]** | **[µg/dm ²]** | **[µg/dm ²]** | **[µg/dm ²]** | **[µg/dm ²]** | **Auslagung [%]** |
| Referenzglas Probe 1 | 163 | 2,9 | 21 | 2,1 | 1,3 | 86 | 100 |
| Probe 2 | 235 | 4,2 | 29 | 1,3 | 1,0 | 76 | |

| **Sol A** | | | | | | | |
|---|---|---|---|---|---|---|---|
| Probe 1 | 1470 | 1,7 | 28 | 0,8 | 0,7 | 68 | 76 |
| Probe 2 | 1380 | 2,1 | 25 | 1,3 | 0,8 | 55 | |

| **Sol B** | | | | | | | |
|---|---|---|---|---|---|---|---|
| Probe 1 | 248 | 0,8 | 14 | 1,7 | 0,9 | 23 | 32 |
| Probe 2 | 529 | 1,7 | 22 | 1,3 | 1,1 | 29 | |

| **Sol C** | | | | | | | |
|---|---|---|---|---|---|---|---|
| Probe 1 | 127 | 1,3 | 17 | 1,3 | 0,9 | 16 | 20 |
| Probe 2 | 151 | 1,7 | 23 | 0,8 | 1,0 | 17 | |

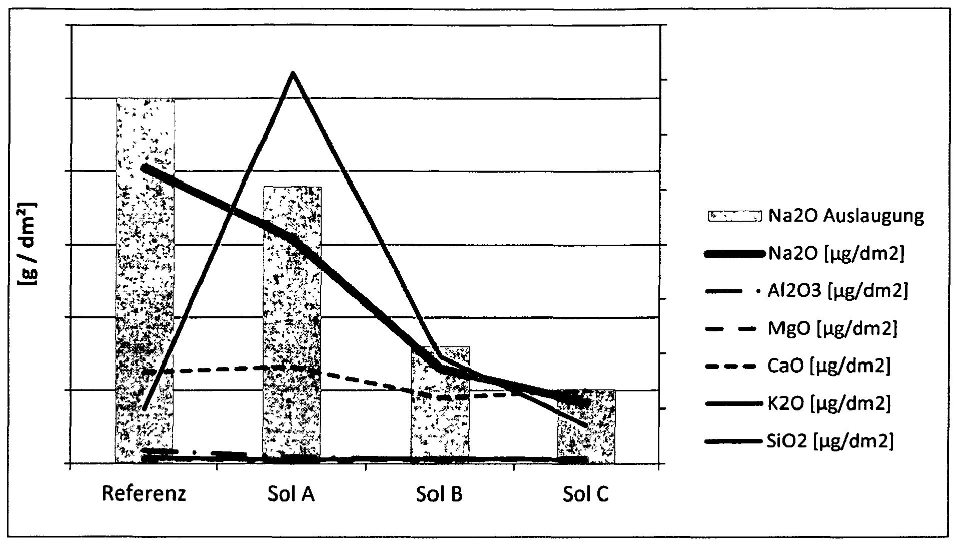

Gemäß der DIN 52296 erfolgt eine Einteilung von Glas (...) in Platten-Wasserbeständigkeitsklassen, abhängig von der oberflächenbezogenen Abgabe an Natriumoxid (Na₂O) in µg/dm². Je höher die Abgabe an Na2O ist, umso höher fällt die Einteilung der Wasserbeständigkeit aus (HP 1 bis HP 5) und umso stärker findet Korrosion statt.

Die Versuche zur partiellen Abdeckung von Glasoberflächen wurden mit drei verschiedenen SiO₂-Solen durchgeführt. Mit Sol A konnte eine Reduktion der Na₂O-Auslaugung auf 76 % im Vergleich zum unbehandelten Glas erreicht werden, mit Sol B auf 32 %. Das beste Ergebnis wurde mit Sol C erzielt. Die Na₂O-Auslaugung wurde damit auf 20 % reduziert. Die übrigen Werte eluierter Glasbestandteile blieben gegenüber dem unbehandelten Glas insbesondere bei Proben aus dem Sol C konstant. Dies deutet auf eine selektiv wirksame Abschirmung durch die partielle Abdeckung, welche nur die korrosionsempfindlichen, an Na-Ionen reichen Zentren schützt, die übrigen Bereiche der Glasoberfläche aber frei zugänglich lässt.

In den FIG. 2 bis 5 ist für die genannten Proben jeweils ein Diagramm dargestellt, das die Größenverteilung der Poren 6 (relative Anzahl der jeweiligen Poren 6 aufgetragen auf der y-Achse als Funktion der Porengröße, aufgetragen auf der x-Achse) in der jeweiligen Korrosions-Schutzschicht 2 wiedergibt. FIG. 2 zeigt dabei die Größenverteilung für Sol A. Die Adsorptionskurve weist eine mittlere Kapillargröße mit einem Durchmesser von 5 nm auf. Das mit Wasser gemessene Gesamtvolumen der offenen Poren 6 beträgt 34 %. Es sind keine großen Poren 6 oder Kapillaren vorhanden, durch die, weiteres Wasser auf die Oberfläche des Glases 1 dringen kann.

Proben aus Sol A sind somit SiO₂ Beschichtungen mit offenen Stellen (Poren), die im Mittel kleiner 5 nm groß sind. Es gibt somit keine großen Poren 6, und Wasser dringt nur über diese kleinen Kapillaren zum Glas 1 vor. Sie haben ein Gesamtvolumen von 34 %. Die nanoporöse Schicht 2 überzieht die gesamte Oberfläche des Glases 1 und ist mit ihr zu zwei Dritteln verbunden. Dadurch kann Wasser nicht mehr ungehindert angreifen, und die Na₂O-Auslaugung reduziert sich auf 76 % des ursprünglichen Wertes. Allerdings zeigen die gegenüber der Referenz deutlich angestiegenen SiO₂-Werte im Eluat, dass die Schicht angelöst wird (siehe Tabelle 1, 2. Spalte).

Diese nanoporöse Schicht kann mit einem engmaschigen Netz verglichen werden, das auf der Glasoberfläche liegt und die Na-Ionen am Austritt hindern. Es ist verständlich, dass demgegenüber eine dichte Abdeckfolie eine deutlich bessere Schutzwirkung aufweist, weil die Na-Ionen in diesem Fall nicht mehr durch Maschen eines Netzes entweichen können. Herkömmliche Korrosionsschutzschichten sind solche Folien oder Filme auf Glas.

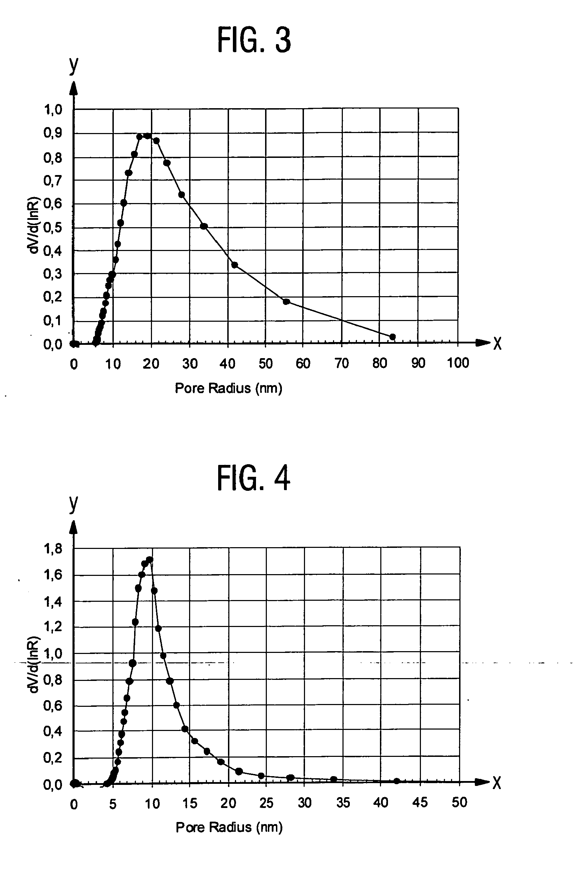

Wird statt des engmaschigen Netzes ein weitmaschigeres verwendet, so sollte sich wegen der jetzt vergrößerten freien Oberfläche des Glases 1 der Na-Austritt verbessern und die Korrosion im Vergleich zu Proben aus Sol A beschleunigt werden. Bei Proben aus Sol B (Größenverteilung gemäß FIG. 3) ist ein solches weitmaschigeres Netz erzeugt worden. Das offene Porenvolumen ist mit 43 % deutlich größer als bei Proben aus Sol A, und es gibt viele offene Stellen auf der Glasoberfläche, die bis zu 150 nm groß sind. Wasser kann an viel mehr Stellen an die Glasoberfläche gelangen, als bei Proben aus Sol A. Die Na₂O-Auslaugung sollte dementsprechend höher sein.

Überraschenderweise ist demgegenüber aber die Korrosionsschutzwirkung bei Proben aus Sol B viel höher als bei Proben aus Sol A. Trotz der großen offenen Stellen, durch die Wasser leicht auf die Glasoberfläche gelangen kann, wurde eine Reduktion der Auslaugung auf 32 % des ursprünglichen Wertes erreicht. Daraus kann geschlossen werden, dass überproportional viele Stellen auf der Glasoberfläche abgeschirmt worden sind, die reich an Na-Ionen und anfällig für Korrosion sind. Eine weitere Verbesserung dieses gezielten Na₂O-Verschlusses sollte erreichbar sein, indem möglichst alle relevanten Stellen des Glases mit diffusionshemmendem Material in geeignet gewählter Stärke abgeschirmt werden. Dies wird durch Proben aus Sol C bestätigt, deren Größenverteilung in FIG. 4 dargestellt ist.

Die ellipsometrische Messung bei Proben aus Sol C zeigt, dass die großen offenen Bereiche im Vergleich zu Proben aus Sol B kleiner geworden sind. Sie sind jetzt nur maximal 60 nm groß, während das Porenvolumen mit 44 % praktisch gleich geblieben ist. Die Na-Diffusion ist hier stark gehemmt, und Korrosion findet kaum noch statt. An Proben aus Sol C sind die sehr kleinen Poren (∅<10nm), wie sie bei Proben aus Sol A zu finden sind, nicht nachweisbar. Die wenigen, kleinsten Zugänge zum Glas sind im Durchmesser 11 nm groß, die allermeisten haben einen Durchmesser von 19 nm. Der Korrosionsschutz ist im Vergleich zu Proben aus Sol B noch besser geworden und erreicht jetzt nur 20 % des ursprünglichen Auslaugewertes. Vergleicht man die durchschnittlichen Masseanteile an ausgelaugtem SiO₂ dieser Proben, so beträgt diese nur etwa 35 % des Masseanteils der Referenzproben. Es liegt demnach mehr diffusionshemmendes Material der geeigneten Ausdehnung auf dem Glas 1 und verschließt dadurch auch mehr empfindliche Bereiche der Glasoberfläche. Damit ist belegt, dass ein hoch wirksamer Korrosionsschutz mit einer partiellen Abschirmung der Glasoberfläche erreicht werden kann und nicht die gesamte Oberfläche mit einer undurchlässigen Schicht überzogen werden muss.

Die Diffusion der Na-Ionen aus dem Glas konnte um 80 % reduziert werden, und es wurde eine Schutzwirkung erreicht, die bisher nur mit geschlossenen Schichten möglich war. Natron-Kalk Glas der Platten-Wasserbeständigkeitsklasse DIN 52 296 - HP 3 wird durch die nun vorgesehene Ausgestaltung bis auf HP 1 verbessert. Das ist eine Wasserbeständigkeitsklasse, in der Glaskeramiken eingeordnet sind. Die Abgabe an Na₂O darf in dieser Klasse maximal 20 µg/dm² betragen. In HP 2 wird eine auf die Oberfläche bezogene Abgabe an Na₂O bis 40 µg/dm² eingeordnet (vgl. dazu Tabelle 1).

Zur Herstellung von Solen mit diffusionsdichten Kolloiden (insbesondere Sol B und C) stehen verschiedene Wege offen, die aus der Sol-Gel-Chemie bekannt sind. Sie beruhen auf einem thermodynamisch getriebenen Prozess zur Verringerung der Grenzfläche. Dabei wird die freie Energie chemischer Verbindungen in Aggregationen minimiert, indem deren Gesamtoberfläche, d.h. die äußere wie auch die von außen für Wasser zugängliche innere Oberfläche durch Auflösung und Präzipitation reduziert wird, bis aus ihnen schließlich dichte Kolloidpartikel entstanden sind. Dichte Kolloide werden aus Tetraethoxysilan vorteilhaft unter Rühren nahe des isoelek-trischen Punktes (pH 2) hergestellt. Unter diesen Bedingungen ist die Kondensationsrate klein und die Austauschrate an Kieselsäure enthaltener Flüssigkeit groß. Der pH-Wert kann beispielsweise mit Ameisensäure, Phosphorsäure, Salpetersäure, Salzsäure, Schwefelsäure eingestellt werden. Als nicht bevorzugte Variante wurde zum Vergleich Sol A herangezogen. Es ist ein Kieselsol in ammoniakalischer Lösung.

Besonders gute Ergebnisse wurden mit Solen erzielt, in denen eine Mischung aus Schwefelsäure und Phosphorsäure verwendet wurde, um den pH-Wert 2 einzustellen (Sol C). Bei der Herstellung der erfinderischen Sole ist weiter zu berücksichtigen, dass die Entstehung der vorteilhaften dichtenden Partikel vergleichsweise langsam verläuft. Daher sind entsprechend synthetisierte Sole üblicherweise erst nach einer Reifezeit von mindestens einer Woche gebrauchsfertig. Die resultierende Schutzwirkung der Schicht 2 wird auch durch die relative Luftfeuchte während des Beschichtens beeinflusst. Werden Schutzschichten zwischen 30 % und 60 % relativer Feuchte aufgetragen, so widerstehen dementsprechend ausgerüstete Gläser 1000-h-Tests bei 85 % Luftfeuchte und 85 °C.

Die Herstellung der Sole kann insbesondere nach folgendem beispielhaften Verfahren erfolgen: In einer 2 I Glasflasche (Schott-Duran) mit einem etwa 5 cm großen Rührfisch werden auf einer Waage 87,00 g Isopropanol mit 136,0 g 0,5 molare Schwefelsäure gemischt und auf einem Magnetrührer bei mittlerer Geschwindigkeit 5 min. gerührt. Dann werden in diese Mischung 18,0 g 85%ige Phosphorsäure eingewogen und weitere 5 min. gerührt. Die Glasflasche verbleibt auf dem Magnetrührer. In die Mischung werden jetzt aus einem Becherglas 116 g zuvor eingewogenes 0830A-Köstrosol (Chemiewerke Bad Köstritz) unter Rühren zügig zugegeben und weitere 10 min. gerührt. Abschließend wird die Mischung noch mit 1383 g Isopropanol unter Rühren verdünnt und eine Stunde lang weitergerührt. Dann wird der Rührer abgestellt und das fertige Sol eine Woche ruhen gelassen. Es ergibt sich 2,1 I Beschichtungssol.

Zum Beschichten werden Scheiben aus Natron-Kalk-Glas in der Laborspülmaschine gereinigt und noch am selben Tag verwendet. Das Raumklima für die Beschichtung und Trocknen des Nassfilms wird auf 21 °C und 50 % relative Feuchte eingestellt. Für Enddicken der Schutzschicht von etwa 120 nm werden die Scheiben in das Beschichtungssol getaucht und mit einer Ziehgeschwindigkeit von 15 cm/min. herausgezogen.

Die beschichtete Glasscheibe wird unmittelbar nach dem Verdampfen von Lösemitteln mit VE-Wasser abgespült, um die Säuren zu entfernen. Danach kommt sie in einen auf 700 °C geheizten Ofen und verbleibt dort für 135 s. Direkt nach dem Abkühlen (etwa 15 min.) ist die beschichtete Glasscheibe korrosionsbeständig und kann verwendet werden. Alternativ kann die beschichtete Glasscheibe direkt nach dem Abkühlen mit VE-Wasser gründlich abspült werden, um Sulfat und Phosphoroxid aus der Schicht zu entfernen. Nach dem Trocknen mit Druckluft ist die Glasscheibe gebrauchsfertig. Alternativ zu dem Einbrand im Laborofen kann die Scheibe einem ESG Prozess unterworfen werden.

### Bezugszeichenliste

- 1: Glas
- 2: Korrosions-Schutzschicht
- 4: Basismaterial
- 6: Poren

## Patentansprüche

1. Glas (1), versehen mit einer Korrosions-Schutzschicht (2), die porös ausgeführt ist und dessen Poren (6) eine Größenverteilung aufweisen, deren Maximalwert bei einem Durchmesser von mindestens 8 nm liegt.

2. Glas (1) nach Anspruch 1, dessen Korrosions-Schutzschicht (2) eine Porengröße von mindestens 9 nm, vorzugsweise von mindestens 10 nm, besonders bevorzugt eine Poren-größe im Bereich 12 bis 30 nm im Durchmesser, aufweist.

3. Glas (1) nach Anspruch 1 oder 2, dessen Korrosions-Schutzschicht (2) eine Porengröße von höchstens 50 nm im Durchmesser aufweist.

4. Glas (1) nach einem der Ansprüche 1 bis 3, welches mit einer Korrosions-Schutzschicht (2) versehen ist, dessen Porosität, gemessen durch den Anteil des Porenvolumens am Gesamtvolumen der Schicht (2), zwischen 30 und 60 % aufweist.

5. Glas (1) nach einem der Ansprüche 1 bis 4, bei dem als Basismaterial zur Bildung der Korrosions-Schutzschicht (2) ein sich mit der Glasoberfläche diffusionsdicht verbindendes Material, insbesondere Al2O3, TiO2, ZrO2, P2O5 oder MgF2, besonders bevorzugt SiO2, vorgesehen ist.

6. Glas (1) nach Anspruch 5, bei dem das Basismaterial in der Korrosions-Schutzschicht (2) als Kolloid-Material vorliegt.

7. Glas (1) nach einem der Ansprüche 1 bis 6, das als vorgespanntes Sicherheitsglas ausgeführt ist.

8. Verfahren zur Herstellung eines Glases (1) nach einem der Ansprüche 1 bis 7, bei dem die Korrosions-Schutzschicht (2) mittels eines Sol-Gel-Verfahrens auf ein Glassubstrat aufgebracht wird.

9. Verwendung eines Glases (1) nach einem der Ansprüche 1 bis 7 zur Abdeckung eines Sonnenkollektors oder einer photovoltaischen Zelle.

10. Verwendung eines Glases (1) nach einem der Ansprüche 1 bis 7 in einem Fenster-element, insbesondere in einem Gewächshaus, Tropenhaus oder einer Nasszelle.

11. Verwendung eines Glases (1) nach einem der Ansprüche 1 bis 7 für marine Zwecke, insbesondere eines Schiffes.

12. Verwendung des Glases (1) für die Luft- und Raumfahrt, insbesondere in einem Cockpit eines Flugzeugs
